# EUROPÄISCHE PATENTANMELDUNG

(11) **EP 0 560 751 A1**
(43) Veröffentlichungstag der Anmeldung: **15.09.1993**
(21) Anmeldenummer: 93890037.0
(22) Anmeldetag: 05.03.1993
(51) Int. Cl.: H02G 3/16

(54) **Anschlussdose für Fernsprechleitungen u. dgl.**

(30) Priorität: 09.03.1992 AT 456/92
(71) Anmelder: UMGEHER Ges.m.b.H. & Co KG, A-3204 Kirchberg/P. (AT)
(72) Erfinder: Umgeher, Kurt, A-3204 Kirchberg a. P. (AT)
(74) Vertreter: Rippel, Andreas, Dipl.-Ing.

(57) **Zusammenfassung**

Bei einer Anschlußdose für Fernsprechleitungen und dgl., in der Leitungsverbinder gelagert sind, sind die Leitungsverbinder (4) auf einer Platte (19) befestigbar, die an den Ecken eines Quadrates angeordnete kreuzförmige Schlitze (21) mit mittigen Bohrungen (22) aufweist. In der Dose sind in einem den Bohrungen (22) entsprechenden Raster Schrauben (23) angeordnet, so daß die Leitungsverbinder (4) auf einfache Weise in verschiedener Lage in der Dose gelagert werden können.

## Beschreibung

Die Erfindung bezieht sich auf eine Anschlußdose für Fernsprechleitungen und dgl., in der Leitungsverbinder gelagert sind.

Es ist das Ziel vorliegender Erfindung, eine solche Dose derart auszubilden, daß die Leitungsverbinder auf einfache Weise in verschiedener Lage in der Dose gelagert werden können.

Dieses Ziel wird dadurch erreicht, daß die Leitungsverbinder auf einer Platte befestigbar sind, die an den Ecken eines Quadrates angeordnete kreuzförmige Schlitze mit mittigen Bohrungen aufweist, und in der Dose in einem den Bohrungen entsprechenden Raster Schrauben angeordnet sind. Bei einer erfindungsgemäßen Anschlußdose kann daher nach leichtem Lösen der Schrauben die Platte verschoben, ausgehoben, und um 90° verdreht wieder eingesetzt werden.

Um beim Einsetzen der Platte eine automatische Erdung zu erzwingen, sind an der Unterseite der Platte Erdungsschienen angeordnet, die beim Einsetzen der Platte in die Dose zwangsläufig auf eine in der Dose vorgesehene Erdungsschiene zum Anliegen kommen.

Die an der Platte angeordneten Erdungsschienen sind dabei zweckmäßig mit schlüssellochförmigen Schlitzen versehen, denen eine an derdosenseitigen Erdungsschiene angeordnete Schraube zugeordnet ist.

Die Erfindung hat es sich weiter zum Ziel gesetzt, eine Anschlußdose für Fernsprechleitungen und dgl., die mit Bohrungen für Schrauben eines Deckels versehen ist, zu schaffen, bei der es insbesondere möglich ist, Einbauungenauigkeiten auf einfache Weise auszugleichen.

Erreicht wird dieses der Erfindung zugrunde liegende Ziel dadurch, daß in die Öffnungen Dübel eingesetzt und die Schrauben in die Dübel eingeschraubt sind. Durch die erfindungsgemäße Maßnahme werden nicht nur die Nachteile von selbstschneidenden Schrauben vermieden, es wird insbesondere erreicht, daß nach dem Einbau einer Unterputzdose durch Lockern der Schrauben, anschließendes Verschieben der Dübel und Wiederanziehen der Schrauben eine an die benachbarten Wandflächen perfekt anschließende Deckeloberfläche möglich wird.

Eine besonders zweckmäßige Ausführungsform der Erfindung zeichnet sich dadurch aus, daß derAnschlußdose zwei Deckel zugeordnet sind, von denen einer beim Einbau der Dose diese im wesentlichen dicht verschließt, wogegen der andere nach dem Einbau Einbauungenauigkeiten ausgleicht. Der beim Einbau verwendete Deckel kann dabei aus billigem Material bestehen, da er nach dem Einbau nicht mehr gebraucht wird.

Damit eine erfindungsgemäße Anschlußdose auch als Aufputzdose verwendbar ist, ist nach einem weiteren Merkmal der Erfindung vorgesehen, daß die Dose an ihrer dem Deckel abgewendeten Seite im Abstand von den Rändern Vorsprünge aufweist und ein Schubdeckel vorgesehen ist, der im Bereich der Vorsprünge mit einem Schlitz versehen ist. Dieser Schubdeckel kann daher von der Seite her über die Anschlußdose geschoben werden und deckt diese im sichtbaren Bereich ab.

Bei einer vorteilhaften Ausführungsform der Erfindung sind dabei die Vorsprünge als wenigstens teilweise mittig verlaufender Steg ausgebildet.

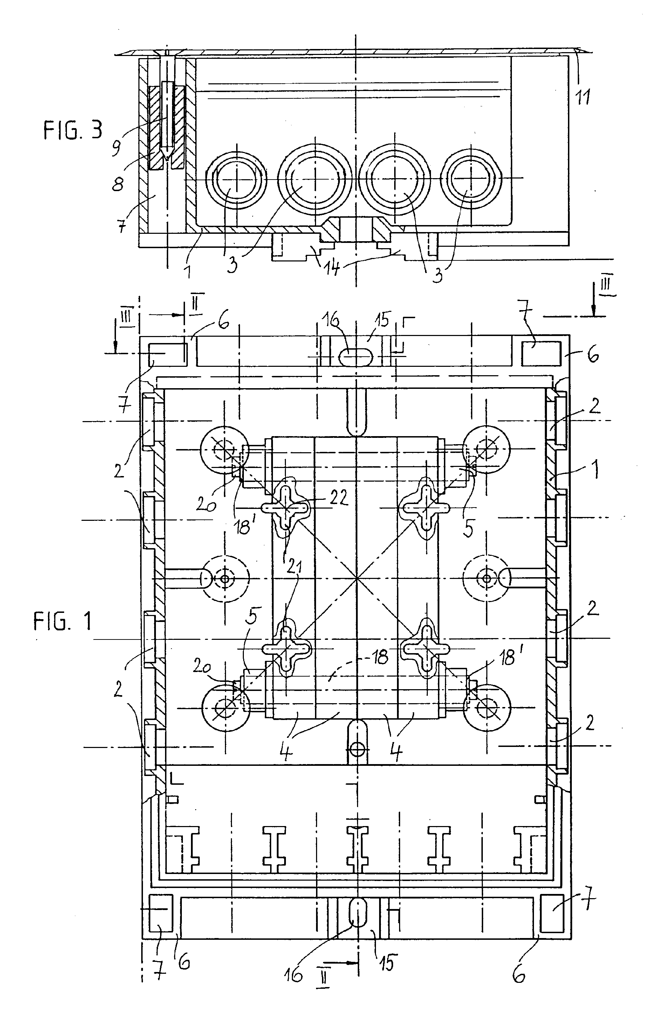

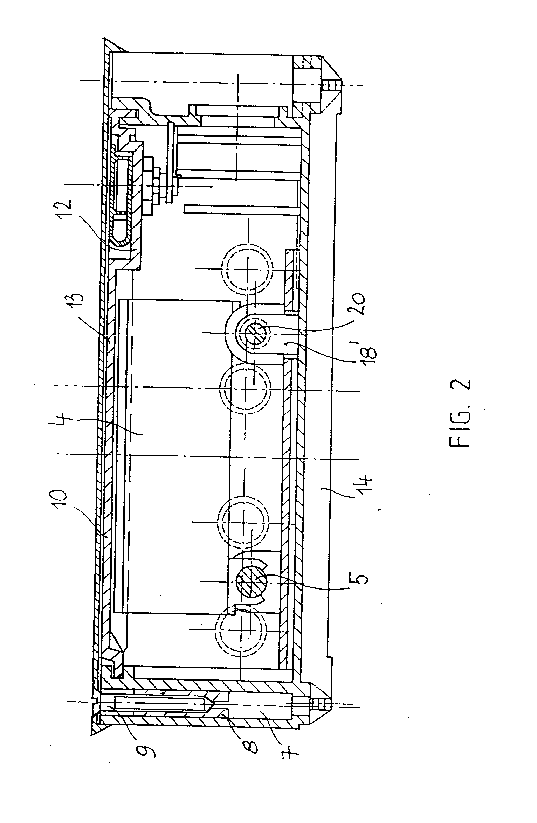

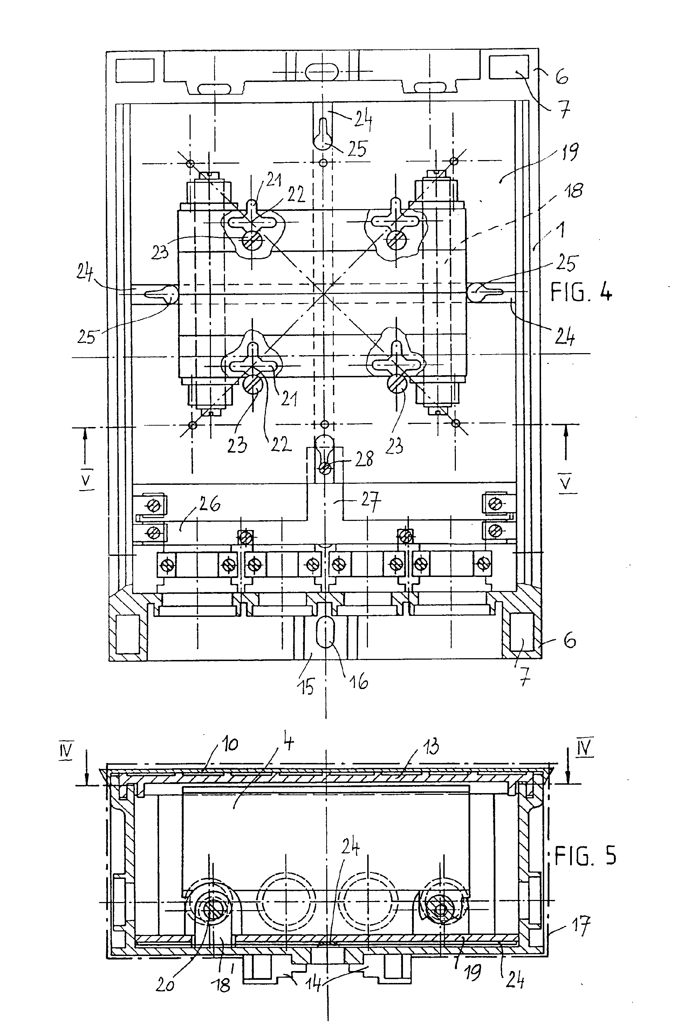

Nachstehend ist die Erfindung anhand eines in den Zeichnungen dargestellten Ausführungsbeispieles näher beschrieben, ohne auf dieses Beispiel beschränkt zu sein. Dabei zeigen: Fig. 1 in Draufsicht ohne Deckel, teilweise geschnitten, eine erfindungsgemäße Anschlußdose; Fig. 2 einen Schnitt nach der Linie 11-11 in Fig. 1, wobei der bei dem Einbau der Anschlußdose verwendete Deckel aufgesetzt ist; Fig. 3 einen Schnitt nach der Linie 111-111 in Fig. 1, wobei der nach dem Einbau verwendete Deckel aufgesetzt ist; Fig. 4 einen Schnitt nach der Linie IV IV in Fig. 5 und Fig. 5 einen Schnitt nach der Linie V-V in Fig. 4 mit dem Deckel entsprechend Fig. 2.

Eine aus Kunststoff bestehende Anschlußdose für Fernsprechleitungen besitzt einen Dosenkörper 1, der eine quaderförmige Gestalt aufweist und an seinen längeren Seitenwänden mit Öffnungen 2 und an seinen kürzeren Seitenwänden mit Öffnungen 3 zum Einführen von zu- oder abgehenden Leitungen versehen ist. Die Leitungsverbinder 4, die nur in ihren Umrissen angedeutet sind, sind auf Bolzen 5 aufgeschnappt, die im Dosenkörper 1 befestigt sind. Die besondere Art der Befestigung wird noch näher erläutert werden.

An den vier Ecken des Dosenkörpers 1 sind Vorsprünge 6 angeformt, in denen Öffnungen 7 angeordnet sind. Aus den Fig. 2 und 3 ist ersichtlich, daß in die Öffnungen 7 Dübel 8 eingesetzt sind, in die Schrauben 9 eingeschraubt sind. Diese Schrauben 9 befestigen dabei gemäß Fig. 2 einen Deckel 10 und gemäß Fig. 3 einen Deckel 11. Unterhalb des Deckels 10 bzw. 11 ist noch eine schwenkbare Türe 13 angeordnet, die mit einem Schloß 12 versehen ist.

Soll die Anschlußdose als Unterputzdose verwendet werden, wird sie, so wie sie in den Fig. 2 und 5 dargestellt ist, in eine vorbereitete Öffnung einer Wand eingemauert. Es braucht dabei nicht besondere Sorgfalt auf ein Fluchten des Deckels 10 mit der umgebenden Wandfläche gelegt werden, da Ungenauigkeiten noch ausgeglichen werden können.

Nach dem Einbauen wird durch Lösen der Schrauben 9 der aus minderwertigem Material bestehende Deckel 10 entfernt und statt dessen der Deckel 11 aufgesetzt. Es ist dabei leicht möglich, bei etwas gelösten Schrauben 9 die Dübel 8 in den Öffnungen 7 solange zu verschieben, bis der Deckel 11 mit den angrenzenden Wandflächen fluchtet bzw. mit seinem etwas vorspringenden Rand an der Wand anliegt. Anschließend können die Schrauben 9 fest angezogen werden.

Um eine Verwendung der erfindungsgemäßen Anschlußdose als Aufputzdose zu ermöglichen, ist der Dosenkörper 1 an seiner den Deckeln 10 bzw. 11 abgewendeten Seite mit Vorsprüngen 14, 15 versehen. Die Vorsprünge 15 besitzen Durchgangslöcher 16, in die Schrauben zur Befestigung des Dosenkörpers 1 an der Wand eingesetzt werden können. Die Vorsprünge 14 sind abgestuft, um eine Befestigung an einem Mast zu ermöglichen. Da zufolge der Vorsprünge 14, 15 die Rückwand des Dosenkörpers im Abstand von der Mauer verläuft, kann ein mit einem Schlitz versehener Schubdeckel 17 seitlich auf den Dosenkörper aufgeschoben werden. Der Umriß eines solchen Schubdeckels 17 ist in Fig. 5 mit strichpunktierten Linien angedeutet.

Die Bolzen 5 sind mittels Erdungsschienen 18 auf einer Platte 19 befestigt; vgl. insbesondere die Fig. 2, 4 und 5. Hiezu sind die unter der Platte 19 verlaufenden Erdungsschienen 18 mit aufgebogenen Schenkeln 18' durch Schlitze der Platte 19 durchgesteckt und die Schenkel 18'sind mittels Schrauben 20 mit den Bolzen 5 verbunden.

Die Platte 19 ist quadratisch und weist kreuzförmige Schlitze 21 auf, die mittig, also an den Kreuzungspunkten, Bohrungen 22 besitzen. Diese Bohrungen 22 sind an den Ecken eines Quadrates angeordnet. In den Dosenkörper 1 sind Schrauben 23 eingeschraubt, deren Anordnung der Anordnung der Bohrungen 22 entspricht.

Außer den Erdungsschienen 18 verlaufen unterhalb der Platte 19 zwei Erdungsschienen 24, die an ihren Enden mit schlüssellochförmigen Ausnehmungen 25 versehen sind.

Im Dosenkörper ist eine Erdungsschiene 26 angeordnet, die einen gegen die Platte 19 gerichteten Vorsprung 27 aufweist, in den eine Schraube 28 eingeschraubt ist.

Mit der beschriebenen Anordnung ist es auf einfache Weise möglich, die Platte 19 mit den Bolzen 5 aus der in Fig. 4 dargestellten Stellung in die um 90° verdrehte Stellung nach Fig. 1 (hier sind aus Gründen einer übersichtlicheren Darstellung die Erdungsschienen 18,24 und die Schrauben 23 nicht eingezeichnet) zu bringen.

Nach leichtem Lösen der Schrauben 23 und 28 wird die Platte 19, bezogen auf die Zeichnung, nach unten verschoben, bis die Schrauben 23 sich in der Mitte der Bohrungen 22 befinden, worauf die Platte um 90° verdreht und wieder eingesetzt wird. Nun wird die Platte 19 wieder nach oben geschoben und die Schrauben angezogen. Es kommt dabei zufolge des Aufliegens einer Erdungsschiene 24 auf dem Vorsprung 27 automatisch zu einer Erdung.

## Patentansprüche

1. Anschlußdose für Fernsprechleitungen und dgl., in der Leitungsverbinder gelagert sind, dadurch gekennzeichnet, daß die Leitungsverbinder (4) auf einer Platte (19) befestigbar sind, die an den Ecken eines Quadrates angeordnete kreuzförmige Schlitze (21) mit mittigen Bohrungen (22) aufweist, und in der Dose in einem den Bohrungen (22) entsprechenden Raster Schrauben (23) angeordnet sind.

2. Anschlußdose für Fernsprechleitungen und dgl., nach Anspruch 1, dadurch gekennzeichnet, daß an der Unterseite der Platte (19) Erdungsschienen (24) angeordnet sind, die beim Einsetzen der Platte (19) in die Dose zwangsläufig auf eine in der Dose vorgesehene Erdungsschiene (26,27) zum Anliegen kommen.

3. Anschlußdose für Fernsprechleitungen und dgl., nach Anspruch 2, dadurch gekennzeichnet, daß die an der Platte (19) angeordneten Erdungsschienen (24) mit schlüssellochförmigen Schlitzen (25) versehen sind, denen eine an der dosenseitigen Erdungsschiene (26,27) angeordnete Schraube (28) zugeordnet ist.

4. Anschlußdose für Fernsprechleitungen und dgl., nach einem derAnsprüche 1 bis 3, die mit Öffnungen zum Einsetzen von Befestigungsschrauben eines Deckels versehen ist, dadurch gekennzeichnet, daß in die Öffnungen (7) Dübel (8) eingesetzt und die Schrauben (9) in die Dübel (8) eingeschraubt sind.

5. Anschlußdose für Fernsprechleitungen und dgl. nach einem der Ansprüche 1 bis 4, dadurch gekennzeichnet, daß ihr zwei Deckel (10, 11) zugeordnet sind, von denen einer (10) beim Einbau der Dose diese im wesentlichen dicht verschließt, wogegen der andere (11) nach dem Einbau Einbauungenauigkeiten ausgleicht.

6. Anschlußdose für Fernsprechleitungen und dgl. nach einem der Ansprüche 1 bis 5, dadurch gekennzeichnet, daßdie Dose an ihrer dem Deckel (10, 11 ) abgewendeten Seite im Abstand von den Rändern Vorsprünge (14,15) aufweist und ein Schubdeckel vorgesehen ist, der im Bereich der Vorsprünge mit einem Schlitz versehen ist.

7. Anschlußdose für Fernsprechleitungen und dgl. nach Anspruch 6, dadurch gekennzeichnet, daß die Vorsprünge wenigstens teilweise als mittig verlaufender Steg (15) ausgebildet sind.
